(19) Europäisches Patentamt / European Patent Office / Office européen des brevets

(11) **EP 4 575 689 B1**

(12) **EUROPEAN PATENT SPECIFICATION**

(45) Date of publication and mention
of the grant of the patent:
**20.05.2026 Bulletin 2026/21**

(21) Application number: **24211820.6**

(22) Date of filing: **08.11.2024**

(51) International Patent Classification (IPC):
*G05B 23/02* *(2006.01)*

(52) Cooperative Patent Classification (CPC):
**G05B 23/0254; G05B 23/0283;** G05B 2219/37542;
G05B 2219/45048

(54) **A SYSTEM FOR MONITORING A CYCLICALLY MOVING COMPONENT OF A MACHINE IN A FOOD PACKAGING LINE**

SYSTEM ZUR ÜBERWACHUNG EINER SICH ZYKLISCH BEWEGENDEN KOMPONENTE EINER MASCHINE IN EINER LEBENSMITTELVERPACKUNGSLINIE

SYSTÈME DE SURVEILLANCE D'UN COMPOSANT À MOUVEMENT CYCLIQUE D'UNE MACHINE DANS UNE LIGNE D'EMBALLAGE D'ALIMENTS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.12.2023 EP 23217420**

(43) Date of publication of application:
**25.06.2025 Bulletin 2025/26**

(73) Proprietor: **Tetra Laval Holdings & Finance S.A.**
**1009 Pully (CH)**

(72) Inventors:
• **Rosenbäck, Ludvig**
**22186 Lund (SE)**
• **Arain, Asif**
**22186 Lund (SE)**
• **Hernandez, Victor**
**22186 Lund (SE)**

(74) Representative: **Tetra Pak Patent Attorneys**
**AB Tetra Pak**
**Patent Department**
**Ruben Rausings gata**
**221 86 Lund (SE)**

(56) References cited:
**CN-A- 112 906 157       CN-A- 115 034 137**
**CN-B- 109 726 524       US-A1- 2021 403 246**

**Description**

Technical Field

The technology relates to the field of machines in a food packaging lines, and associated processing equipment, specifically to monitoring and controlling the operation of cyclically moving components within these machines to ensure efficient and reliable performance.

Background

Machines in food packaging lines, particularly those used for liquid food containers, operate at high speeds to maximize production throughput. These machines consist of numerous intricate components, such as actuators, pistons, bearings, belts, and motors, which work together in a cyclic manner to ensure efficient operation. However, due to the complexity of these machines, it can be challenging to identify and address malfunctions in a timely manner. This can lead to significant production issues, including damaged containers, increased waste, and machine downtime, ultimately affecting production targets and increasing costs.

In the prior art, various methods have been employed to monitor the operation of packaging machines and detect faults. These methods often rely on the use of sensors to collect data on the machine's operation, such as temperature, pressure, and vibration measurements. However, these methods may not be able to accurately pinpoint the exact cause of a malfunction, leading to longer downtime and increased production costs. Additionally, implementing these monitoring systems can be resource-intensive, requiring complex and expensive modifications to the machines of the food packaging line.

Furthermore, existing monitoring systems may not be able to detect faults in real-time, resulting in a delayed response to malfunctions. This can lead to further damage to the machine and its components, as well as increased waste due to damaged containers. Moreover, these systems may not be able to accurately predict the operational probability of a component, making it difficult to determine when a component is likely to fail and when preventive maintenance should be performed.

US 2021/403246 A1 discloses fault prediction in a packaging machine comprising registering data values at a defined time interval associated with the motion of independently movable objects along a track in the packaging machine; determining for each motion cycle, a set of condition parameters comprising the measure of central tendency and the quantified measure of the shape of the distribution; determining a degree of dispersion of the sets of condition parameters associated with a plurality of motion cycles of the independently movable objects; and comparing the degree of dispersion with a dispersion threshold value, or determining a trend of the degree of dispersion over time, for said fault prediction.

Documents CN 112 906 157 A, CN 109 726 524 B and CN 115 034 137 A disclose solutions for predicting a health state and the remaining useful life of bearings, where real-time data is collected and a corresponding degradation fitting curve is obtained. Based on the degradation fitting curve and the corresponding predefined thresholds the health status and the remaining life of the bearing are predicted.

In summary, the prior art has several limitations, including the inability to quickly and accurately detect faulty components, prevent damaged containers, reduce machine downtime, and implement resource-efficient monitoring systems. There is a need for an improved system and method for monitoring machines in food packaging lines that can address these limitations and provide a more efficient and cost-effective solution for detecting and addressing malfunctions in these machines.

Summary

According to a first aspect of the invention, a system for monitoring a cyclically moving component of a machine in a food packaging line is provided. The system comprises a controller configured to receive sensor data from the machine. The controller is further configured to detect a state variable of the cyclically moving component from the sensor data, wherein the state variable is detected over a cycle of the component's movement. The controller generates a model of how the state variable varies over the cycle of the component's movement, comprising a model curve adapted to a plurality of values of the state variable in the sensor data, wherein the state variable is measured at defined steps of the cycle, such as at a defined time interval. The controller determines an operational probability of the component based on the model and an estimation of the state variable for each subsequent step in the cycle wherein the operational probability is in the range of 0 to 1, where 1 represents a likelihood of 100% of normal operation. The controller stops the operation of the machine if the operational probability drops below a defined threshold value. This aspect of the invention provides an advantage of quick detection of faulty components of the machine, ensuring efficient operation and reducing the risk of machine failure.

Optionally, in some examples, the system further comprises a state estimator in communication with the controller. The state estimator is configured to determine the estimation of the state variable for each step in the cycle based on the model, a measured value of the state variable at a current step in the cycle and on previous estimations of the state variable. This provides an advantage of improved accuracy in estimating the state variable and in turn a more reliable determination of the operational probability.

Optionally, in some examples, the state estimator comprises a Particle filter, providing an advantage of efficient and accurate estimation of the state variable.

Optionally in some examples, the operational probability is determined based on the model and on the estimation of the state variable, providing an advantage of particularly reliable and rapid detection of deviations from the components normal motion pattern.

Optionally in some examples, the model comprises a Gaussian model represented by a mixture of Guassian functions, providing an advantage of accurately capturing the variation of the state variable over the cycle of the component's movement.

Optionally in some examples, the state variable comprises a position error, a motor current, and/or a motor torque, providing an advantage of monitoring various aspects of the machine's operation for more reliable monitoring.

Optionally in some examples, the controller is configured to perform a moving average calculation for calculating the operational probability over a defined time interval, providing an advantage of smoothing out fluctuations in the operational probability for more reliable monitoring and control.

Optionally in some examples, the controller is configured to determine the operational probability based on estimations of a plurality of state variables, such as position error estimation and torque estimation, and respective generated models for how the state variables vary over their respective cycle, providing an advantage of a more comprehensive monitoring and control of the machine's operation.

Optionally in some examples, the sensor data is received from existing sensors in the machine, providing an advantage of easy implementation and resource efficiency.

Optionally in some examples, the controller is configured to send the operational probability to a Programmable Logic Controller (PLC) in communication with the controller, wherein the PLC sends a control signal to stop operation of the machine if the operational probability drops below a defined threshold value, providing an advantage of seamless integration with existing control systems.

Optionally in some examples, the controller is further configured to generate an alarm signal when the operational probability drops below a predefined alarm threshold value, providing an advantage of early warning for potential issues in the machine's operation.

Optionally in some examples, the cyclically moving component comprises an actuator, a piston, a bearing, a belt, and/or a motor, providing an advantage of monitoring various components of the machine for better control and efficiency.

Optionally in some examples, the machine comprises a wrapping machine, a filling machine, a conveyor machine, a sealing machine, and/or a packaging machine, providing an advantage of applicability to various types of machines in the food packaging line.

According to a second aspect of the invention, a method for monitoring a cyclically moving component of a machine in a food packaging line is provided. The method comprises receiving sensor data from the machine, detecting a state variable of the cyclically moving component from the sensor data, generating a model of how the state variable varies over the cycle of the component's movement, determining an operational probability of the component based on the model and an estimation of the state variable for each step in the cycle, and stopping operation of the machine if the operational probability drops below a defined threshold value. This aspect of the invention provides an advantage of quick detection of faulty components of the machine, ensuring efficient operation and reducing the risk of machine failure.

According to a third aspect of the invention, a machine for a food packaging line comprising a cyclically moving component and a system for monitoring the cyclically moving component is provided. The system is in communication with the machine and configured to receive sensor data from the machine, detect a state variable of the cyclically moving component from the sensor data, generate a model of how the state variable varies over the cycle of the component's movement, determine an operational probability of the component based on the model and an estimation of the state variable for each step in the cycle, and stop operation of the machine if the operational probability drops below a defined threshold value. This aspect of the invention provides an advantage of an integrated solution for monitoring and controlling the operation of the machine, ensuring efficient operation and reducing the risk of machine failure.

Brief Description of the Drawings

Examples are described in more detail below with reference to the appended drawings.

Figure 1 is a schematic illustration of a system for monitoring a cyclically moving component of a machine in a food packaging line according to the present disclosure when connected to a Programmable Logic Controller (PLC) of such machine.

Figure 2a shows an example of a variation of a state variable (s), such as a position error, over a duration of a cycle of a cyclically moving component.

Figure 2b shows an example of a plurality of cycles of a state variable (s), such as a position error, obtained for the cyclically moving component in Figure 2a.

Figure 3a is an example showing a model curve of a model adapted to the plurality of cycles in Figure 2b.

Figure 3b shows an associated transition model of the model curve in Figure 3a.

Figure 4 illustrates an example of the system determining an operational probability (P) for each step of the cycle, based on the model curve, and on an estimation of the state variable.

Figure 5 provides an example showing an operational probability (P) over a completed cycle of the component, including a threshold (T) to trigger a control signal to stop the machine.

Figure 6 illustrates an example of triggering a stop in a machine of a food packaging line when controlled by the system according to the present disclosure for early deviation detection, where a PLC compares the determined operational probability (P) with a lower threshold to trigger a stop in the machine with a minimal delay.

Figure 7 illustrates an example of a prior art controller to trigger an alarm or stop in a machine when a position error exceeds normal operation.

Figure 8 is a flow chart of a method for monitoring a cyclically moving component of a machine (200) in a food packaging line.

Detailed Description

The detailed description set forth below provides information and examples of the disclosed technology with sufficient detail to enable those skilled in the art to practice the disclosure.

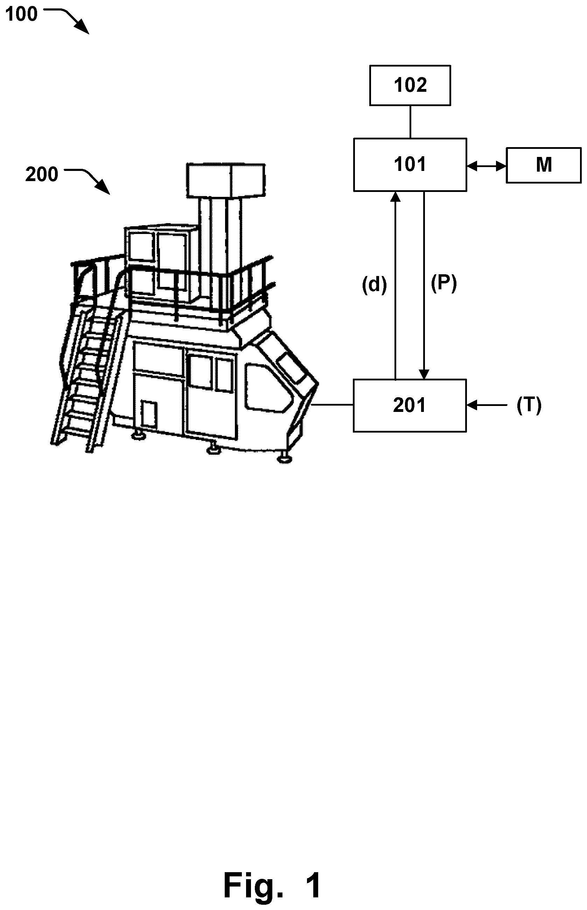

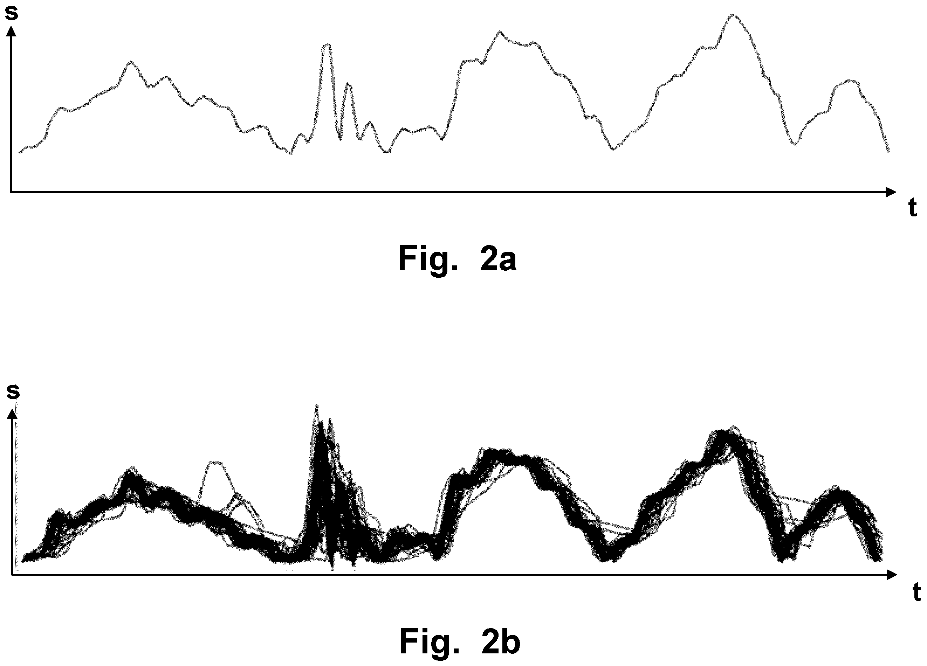

Figure 1 shows a schematic illustration of the system 100 for monitoring a cyclically moving component of a machine 200 in a food packaging line for early deviation detection, when the system 100 is connected to a Programmable Logic Controller (PLC) 201 of such machine 200. A controller 101 of the system 100 receives sensor data (d) of a state variable (s) of a monitored component in the machine 200 via the PLC 201. The state variable (s) is detected over a cycle of the component's movement. Figure 2a illustrates an example of a variation of a state variable (s), such as a position error, over a duration of a cycle of a cyclically moving component. Figure 2b illustrates an example of a plurality of cycles of a state variable (s), such as a position error, obtained for the cyclically moving component in Figure 2a. The state variable is measured at defined steps of the cycle, such as at a defined time interval.

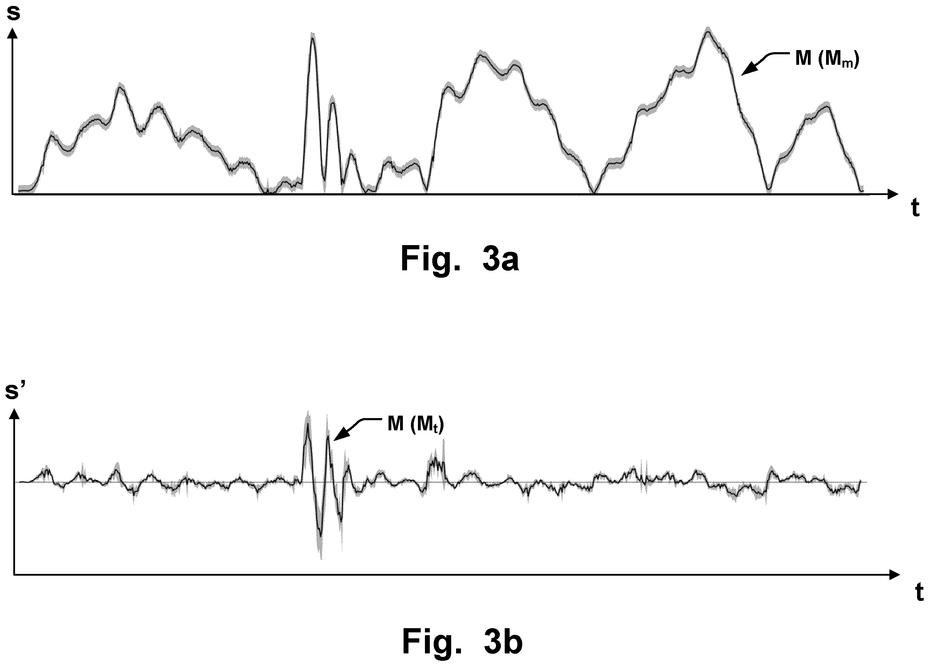

The controller 101 is configured to generate a model (M) of how the state variable (s) varies over the cycle of the component's movement. The model comprises a model curve adapted to a plurality of values of the state variable in the sensor data. In some examples the model comprises a measurement model, which is the time series footprint of the state variable, and a transition model, which is a differential time series of the measurement model. The transition model may be used to guide a state estimator 102 at each time step. The state estimator 102 is configured to determine the estimation the state variable for each step in the cycle as described further below. Figure 3a illustrates an example of a measurement model, denoted $M_m$, of the model (M) adapted to the plurality of cycles in Figure 2b, whereas Figure 3b shows a transition model, denoted $M_t$, of the model (M) for the rate of change of the state variable (s').

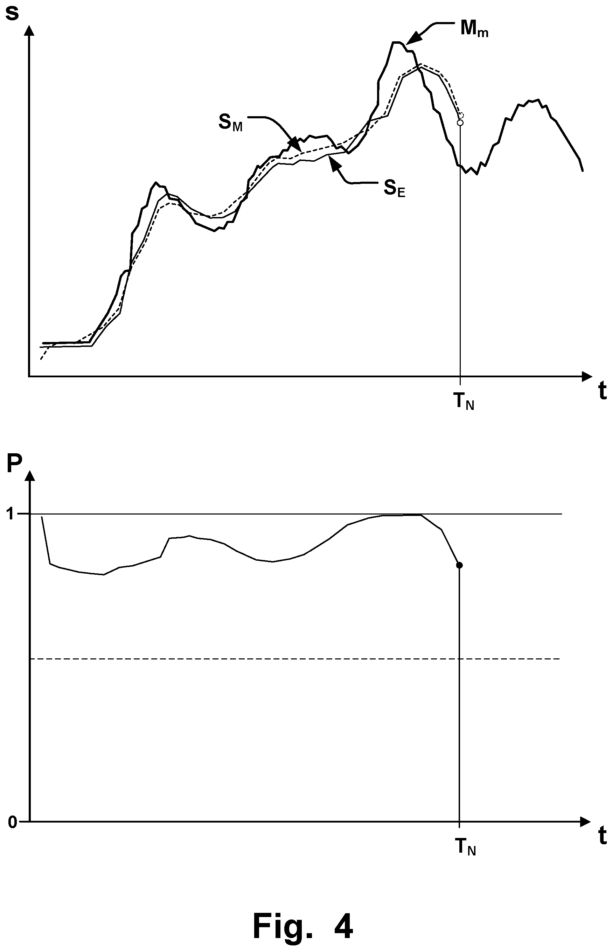

The controller 101 is configured to determine an operational probability (P) of the component based on the model (M) of the state variable (s) and an estimation of the state variable (s) for each step in the cycle. The upper part of Figure 4 illustrates an example where a state estimator 102 estimates the state variable (s) at a step $T_N$ in the cycle (denoted $S_E$) using the current measurement of the state variable (state measurement, denoted $S_M$), the model (only the measurement model $M_m$ is shown for simplicity), and previous estimations of the state variable. The operational probability (P), indicated in the lower part of Figure 4, is determined at step $T_N$ of the cycle using the measurement model and the state estimation.

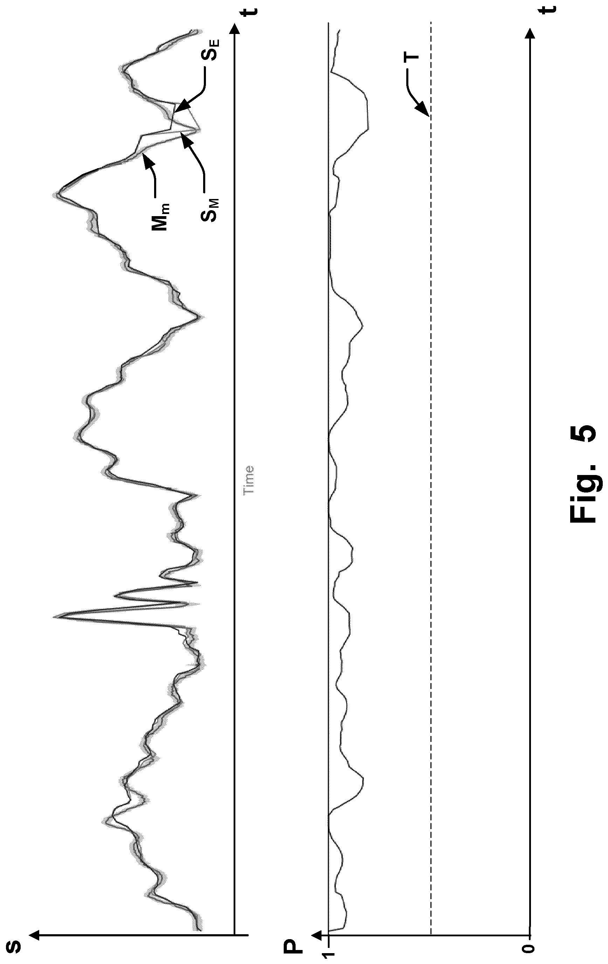

Figure 5 illustrates an example of system 100 determining an operational probability (P) for a complete cycle of the component, including a threshold value (T) to trigger a control signal to stop the machine 200 (bottom half of the figure). The operational probability (P) is determined based on the measurement model ($M_m$) and the estimation of the state variable ($S_E$) in the upper half of the figure.

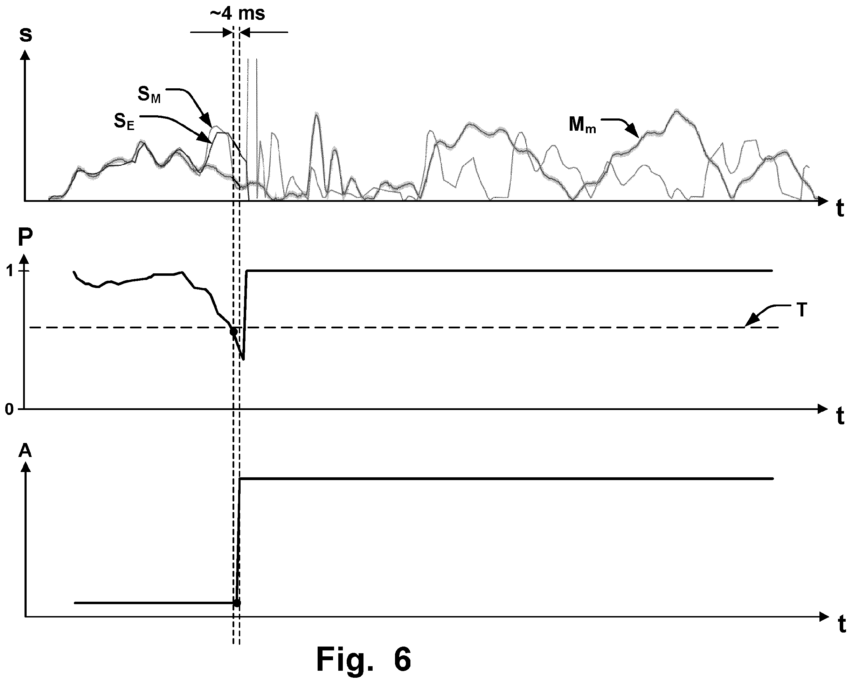

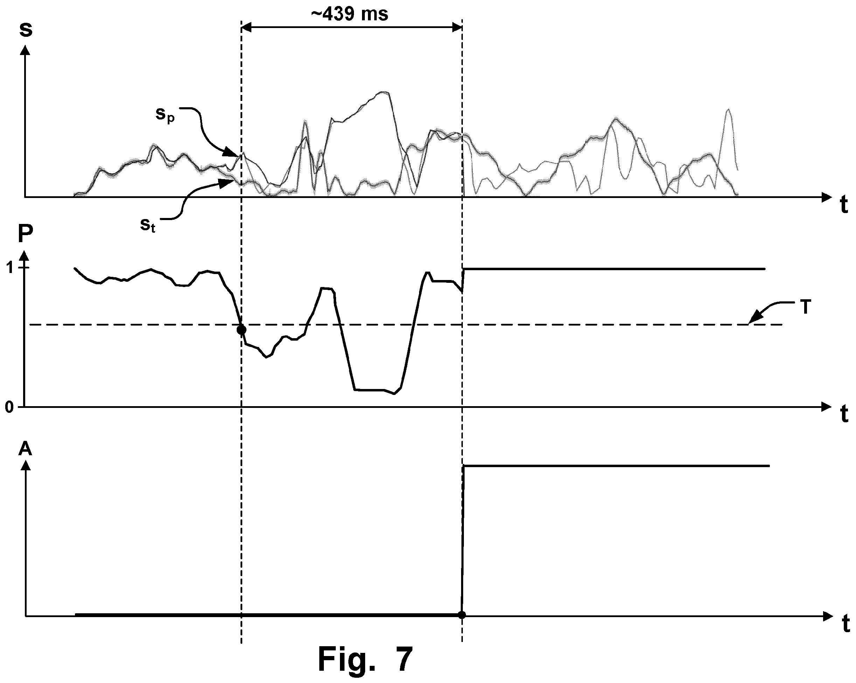

The controller 101 is configured to stop operation of the machine if the operational probability (P) drops below a defined threshold value (T). The controller 101 may output the operational probability (P) to a PLC 201 of the machine 200, as exemplified in Figure 1. The PLC 201 may stop the machine 200 if the probability of normal operation falls below the defined threshold value (T). Figure 6 shows an example of triggering a stop of the machine 200 in a food packaging line controlled by the system 100 for early deviation detection according to the present disclosure. A PLC 201 sends a control signal (A) to stop the machine upon the determined operational probability (P) of the position error passing a lower threshold value (T) with minimal delay. Figure 7 on the contrary presents an example of a prior art controller to trigger an alarm or stop in a packaging machine when a position error ($s_p$) exceeds normal operation represented by a target value ($s_t$), with a significant delay compared to the system 100 of the present disclosure. The threshold (T) is only included in Figure 7 for illustrative purposes in order to compare with the system 100. In one example the system 100 is implemented in a machine 200 such as a shrink wrapper machine for packages containing liquid food. A wrapper machine wraps and shrinks plastic film around a set of individual packages to create a multipack unit, typically at a rate of 40.000 packages per hour. The wrapper machine has a pusher actuator which engages the individual packages with a defined cyclic motion. During operation the pusher actuator can exhibit deviations of its position from the ideal target positions in the defined cycle, i.e. position errors. The position error of the pusher actuator is thus a detectable state variable (s), as referred to above, which is communicated to the controller 100, e.g. via a PLC 201 of the wrapper machine. A model (M) with an associated model curve of how the position error varies over the cycle of the pusher's motion can be generated by the controller 100 based on detecting the position error over an extended period of time, such as during an initial implementation or learning phase where the characteristics of the pusher's motion is established. In one example, the model is learned using a time series data record of 100 strokes, discretized into 635 bins (twice the sample rate using Nyquist frequency). However, the time series data record may have different sizes and adapted to the characteristics of the particularly monitored component. Subsequently, when operating the wrapper machine in a production line, the operational probability (P) is continuously determined for each step in the pusher's cycle as described above. Prior to determining the operational probability (P) for a step in the cycle, the actuator's position error estimation can be determined using a state estimator 102 such as a Particle filter. The particle filter takes as input the generated model (M), a measured value of the state variable at a current step in the cycle and previous estimations of the state variable, as described above. The estimation of the position error and the model (M) is then used as input to determine the operational probability (P). The operational probability (P) can be sent to the PLC 201 which compares it to the threshold (T) set by the operator in order to trigger an immediate stop of the pusher if the operational probability (P) drops below the threshold (T) (see Figure 6). Such drop indicates that the position error will deviate from the normal value in the cyclic operation. In contrast, having a delayed stop of the pusher, such as illustrated in Figure 7 showing a corresponding wrapping machine which has not implemented system 100, typically results in the pusher damaging the packages, since it is not stopped in time by the PLC 201. Due to the high throughput of packages in the wrapping machine even conceivably small delays in such trigger signals to stop operation has a high likelihood of result in significant damages and resulting downtime of the wrapping machine.

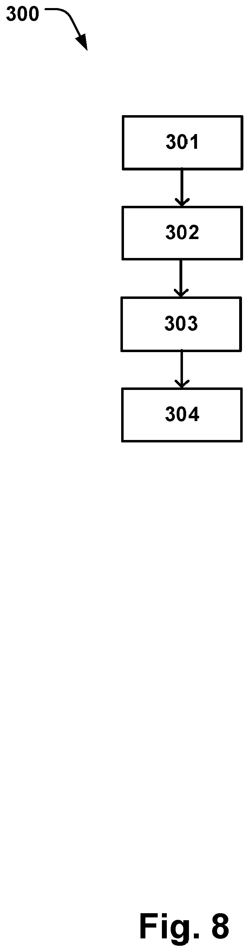

Figure 8 displays a flow chart of a method 300 for monitoring a cyclically moving component of a machine 200 in a food packaging line. The method includes receiving 301 sensor data (d) from the machine, detecting 302 a state variable (s) of the cyclically moving component from the sensor data, generating 303 a model (M) of how the state variable varies over the cycle of the component's movement, determining 304 an operational probability (P) of the component based on the model and an estimation of the state variable for each step in the cycle, and stopping 305 operation of the machine if the operational probability (P) drops below a defined threshold value (T).

Further examples of the system 100 are described in the following.

In one example, the system 100 for monitoring a cyclically moving component of a machine 200 in a food packaging line is configured to connect to a Programmable Logic Controller (PLC) 201. The system 100 comprises a controller 101 that is configured to receiving sensor data (d) from the machine 200, detecting a state variable (s) of the cyclically moving component from the sensor data, generating a model (M) of how the state variable varies over the cycle of the component's movement, and determining an operational probability (P) of the component based on the model and an estimation of the state variable for each step in the cycle. The controller 101 may also be configured to stop the operation of the machine 200 if the operational probability (P) drops below a defined threshold value (T).

In some examples, the system 100 may comprise a state estimator 102 in communication with the controller 101. The state estimator 102 is configured to determine the estimation of the state variable for each step in the cycle based on the model, a measured value of the state variable at a current step in the cycle and on previous estimations of the state variable. The state estimator 102 is in some examples configured to determine the estimation of the state variable based on both the measurement model (see e.g. Fig. 3a) and the transition model (see e.g. Fig. 3b), as well as the aforementioned measured value and previous estimations. The state estimator 102 may comprise a Particle filter, which can provide an accurate estimation of the state variable for the next step in the cycle.

The use of a state estimator 102 in the system 100 provides several advantages. For example, it allows for more accurate estimations of the state variable at each step in the cycle, which in turn leads to more accurate determinations of the operational probability (P) of the component. This can help to identify potential issues with the cyclically moving component more quickly and accurately, allowing for timely intervention to prevent damage or failure of the component.

In one example, the controller 101, state estimator 102, and PLC 201 are in communication with each other to facilitate the monitoring and control of the cyclically moving component of the machine 200. The controller 101 receives sensor data (d) from the machine 200 via the PLC 201 and processes the data to detect the state variable (s) of the cyclically moving component. The state estimator 102 then determines the estimation of the state variable, and the controller 101 calculates the operational probability (P) based on the model (M) and the estimation of the state variable.

The controller 101 may send the operational probability (P) to the PLC 201, which in turn sends a control signal to stop the operation of the machine 200 if the operational probability (P) drops below a defined threshold value (T). This communication between the controller 101, state estimator 102, and PLC 201 allows for efficient and accurate monitoring and control of the cyclically moving component in the machine 200. It is conceivable that in one example the controller 101 is configured to compare the determined operational probability (P) with the defined threshold value (T) and send a control signal to stop the machine 200, e.g. by bypassing the PLC 201.

In some examples, the sensor data (d) received by the controller 101 may be obtained from existing sensors in the machine 200. This can make the system 100 easy to implement and resource-efficient, as it does not require the installation of additional sensors in the machine 200. The controller 101 processes the sensor data (d) to detect the state variable (s) of the cyclically moving component and generate a model (M) of how the state variable varies over the cycle of the component's movement. In some examples the system 100 may be configured to utilize additional sensors to detect the state variable (s).

In some examples, the state variable (s) may comprise a position error of the cyclically moving component. The position error represents the (absolute) difference between the actual position of the component and its desired position at a given time during the cycle. By monitoring the position error as the state variable (s) and determining the operational probability (P) based thereon, the system 100 can detect any deviations from the normal operation of the component, which may indicate potential issues such as wear, misalignment, or other mechanical problems. This allows for early intervention and maintenance, reducing the risk of machine failure and improving overall efficiency. The state variable may comprise other parameters which may characterize the performance of the machine 200, as mentioned further below in section 6.

In some examples, the system 100 may be configured to monitor the state variable (s) over multiple cycles of the component's movement. This allows the system 100 to generate a more accurate and representative model (M) of how the state variable (s) varies over the cycle of the component's movement. By monitoring multiple cycles, the system 100 can account for any variations or fluctuations in the state variable (s) that may occur during normal operation, providing a more robust and reliable method for detecting deviations from normal operation.

In one example, the system 100 may receive sensor data (d) at defined steps of the cycle, such as at a defined time interval. This allows the system 100 to obtain a plurality of measurements of the state variable (s) at different points in the cycle, providing a more detailed and accurate representation of the component's operation. The system 100 may then use these measurements to generate a model (M) of how the state variable (s) varies over the cycle of the component's movement, as described in section 3.

In one example, the system 100 generates a model (M) of how the state variable (s) varies over the cycle of the component's movement. The model comprises a model curve adapted to a plurality of values of the state variable in the sensor data. This model generation allows the system to accurately represent the unique fingerprint of the component's operation cycle, which in turn enables the system to determine the operational probability (P) of the component based on the model and an estimation of the state variable for each step in the cycle.

In some examples, the model of the state variable is represented by a mixture of Guassian functions, i.e. a Guassian model, to provide the model curve, which provides the advantage of accurately capturing the variation of the state variable over the cycle of the component's movement. The Gaussian model may comprise a measurement model, which is the time series footprint of the state variable, and a transition model, which is a differential time series of the measurement model. This way a robust and accurate representation of the component's cyclic movements can be obtained and the operational probability (P) of the component can be accurately determined.

In one example, the model curve (M) is represented by a set of parameters, such as the mean $(\bar{\mu})$, the standard deviation $(\bar{\sigma})$, and step size of the Gaussian curve. These parameters are used in conjunction with the estimation of the state variable (s) to calculate the operational probability (P) of the component at each step of the cycle.

The model curve representation and parameters provide a compact and efficient way to represent the variation of the state variable over the cycle of the component's movement. This representation allows the system to quickly and accurately determine the operational probability (P) of the component based on the model and an estimation of the state variable for each step in the cycle.

In some examples, the system 100 may comprise additional optional features to further enhance the accuracy and efficiency of the model generation and adapting the model curve. For instance, the system may comprise a moving average calculation for calculating the operational probability (P) over a defined time interval. This moving average calculation can help to smooth out any noise or fluctuations in the sensor data, leading to a more accurate representation of the component's operation cycle and a more reliable determination of the operational probability (P).

In summary, the method to determine the model in the system 100 provides a robust and accurate operational representation of a cyclically moving component, which allows a reliable computation of the operational probability (P) of the component. In some examples the representation of the model in the form of a mixture of Gaussian functions, along with optional features such as the moving average calculation, all contribute to the effectiveness of the system in monitoring the cyclically moving component of a machine in a food packaging line and stopping the operation of the machine if the operational probability (P) drops below a defined threshold value.

In one example, the system 100 determines an operational probability (P) of a cyclically moving component of a machine 200 in a food packaging line based on a generated model (M) of a state variable (s) and an estimation of the state variable for each step in the cycle. The operational probability (P) is an indication of the likelihood of the component operating under normal conditions, with a range of 0 to 1, where 1 represents a likelihood of 100% of normal operation.

In some examples, the system 100 may comprise a state estimator 102 in communication with the controller 101. The state estimator 102 can be configured to determine the estimation of the state variable in the cycle based on the model, a measured value of the state variable at a current step in the cycle and on previous estimations of the state variable. The state estimator 102 may comprise a Particle filter for estimating the state of a dynamic system based on noisy measurements.

The use of a state estimator, such as a Particle filter, provides the advantage of improving the accuracy and reliability of the state variable estimation, which in turn leads to a more accurate determination of the operational probability (P) and a more effective monitoring of the cyclically moving component.

In one example, the operational probability (P) is determined for each step of the cycle based on the model (M) and on the estimation of the state variable. In some examples the operational probability (P) is determined based on the measurement model (see e.g. Fig. 3a) and on the aforementioned estimation of the state variable. Thus, in some examples both the measurement model and the transition model may be utilized for determining the state estimation, whereas only the measurement model may be used for the computation of the operational probability P. The operational probability (P) can be calculated according to the following formula:

$$p = e^{\left( \frac{-K_t \cdot |\hat{s} - \overline{\mu}|}{x \cdot \overline{\sigma}} \right)}$$

where $K_t$ and x are curve fitting parameters that map the state changes to the operational probability, $\hat{s}$ is the estimation of the state variable, $\overline{\mu}$ is the mean of the model curve, and $\overline{\sigma}$ is the standard deviation of the model curve (M). This calculation method provides the advantage of taking into account both the model (M) and the estimation of the state variable, resulting in a more accurate and reliable determination of the operational probability (P), and thus a more rapid detection of deviations from a normal operation of the monitored component.

The above formula may be applied when the state estimation is on the undesired side of the mean of the model curve (M). For example, if the state variable is the position error that is to be minimized, the operational probability is computed using the above formula if $\hat{s} > \overline{\mu}$ - otherwise, 1.

In some examples, the system 100 may be configured to perform a moving average calculation for calculating the operational probability (P) over a defined time period. This moving average calculation can help to smooth out short-term fluctuations in the operational probability (P) and provide a more stable and reliable indication of the component's operation.

The curve fitting parameters $K_t$ and x in the operational probability calculation formula may be determined based on the specific characteristics of the cyclically moving component and the state variable being monitored. These parameters can be adjusted to optimize the accuracy and reliability of the operational probability (P) determination.

The use of curve fitting parameters and moving average calculation provides the advantage of improving the accuracy and reliability of the operational probability (P) determination, leading to a more effective monitoring of the cyclically moving component.

In one example, the system 100 may be configured to send a control signal to stop operation of the machine 200 if the operational probability (P) drops below a defined threshold value (T). This threshold value (T) can be set based on the specific requirements and tolerances of the machine and the cyclically moving component being monitored.

The use of a threshold value (T) for stopping machine operation provides the advantage of ensuring that the machine is stopped before any potential damage or failure occurs due to abnormal operation of the cyclically moving component. This can help to prevent costly downtime and repairs, as well as improve the overall efficiency and reliability of the food packaging line.

In some examples, the controller 101 of the system 100 is further configured to generate an alarm signal when the operational probability (P) drops below a predefined alarm threshold value. The alarm threshold value can be set based on the specific requirements of the machine 200 and the monitored component, taking into account factors such as the component's normal operating range, the desired level of sensitivity for detecting deviations, and the acceptable level of false alarms.

The use of an alarm signal and a predefined alarm threshold value provides several advantages. First, it allows for early detection of potential issues with the cyclically moving component, enabling proactive maintenance and reducing the risk of unexpected machine downtime. Second, it provides a means for operators and maintenance personnel to monitor the performance of the component and take corrective action if necessary, without immediately stopping the machine 200. This can help to minimize disruptions to the food packaging line and maintain overall productivity.

In one example, the controller 101 is configured to send the operational probability (P) to a Programmable Logic Controller (PLC) 201 in communication with the controller 101. The PLC 201 sends a control signal to stop the operation of the machine 200 if the operational probability (P) drops below a defined threshold value (T). This communication between the controller 101 and the PLC 201 allows for seamless integration of the system 100 with the existing control infrastructure of the machine 200 and the food packaging line.

The use of a PLC 201 for stopping machine operation based on the operational probability (P) provides several advantages. First, it enables the system 100 to be easily integrated with existing machines and control systems, reducing the need for extensive modifications or additional hardware. Second, it allows for centralized control and monitoring of the machine 200 and the cyclically moving component, simplifying the overall management of the food packaging line. Third, it provides a reliable and robust means of stopping the machine 200 in response to deviations in the operational probability (P), ensuring that potential issues with the cyclically moving component are addressed promptly and effectively.

In some examples, the system 100 may comprise additional features or components to further enhance its functionality and performance. For instance, the system 100 may include a user interface for displaying the operational probability (P) and other relevant information, allowing operators and maintenance personnel to monitor the performance of the cyclically moving component in real-time. The system 100 may also be configured to store historical data on the operational probability (P) and other parameters, enabling trend analysis and predictive maintenance strategies to be implemented.

The disclosed system 100 for monitoring a cyclically moving component of a machine 200 in a food packaging line can be applied to various types of machines and components involved in the food packaging process. This section provides a detailed description of the application of the system 100 to different machines and components in the food packaging line, highlighting the advantages of the claim features and the optional features that may be included in the system.

In one example, the cyclically moving component monitored by the system 100 may be an actuator, which is responsible for controlling the movement of other components in the machine 200. The actuator may be a linear or rotary actuator, and its operation may involve repetitive motion over a defined cycle. In some examples, the cyclically moving component may be a piston, which is responsible for transferring force or motion in the machine 200. The piston may be used in various applications, such as filling, sealing, or conveying food products in the packaging line. In other examples, the cyclically moving component may be a bearing, a belt, or a motor, which are responsible for supporting and transmitting motion in the machine 200. By monitoring the state variable of these components, such as their position error, motor current, or motor torque, the system 100 can determine the associated operational probability (P) as described above and rapidly detect any deviations from the normal operation of these components and take appropriate action, such as stopping the machine 200 or generating an alarm signal.

The system 100 can be applied to various types of machines in the food packaging line, including but not limited to wrapping machines, filling machines, conveyor machines, sealing machines, and packaging machines.

In one example, the system 100 may be applied to a wrapping machine, which is responsible for wrapping food product packages in a protective film or other packaging material. The wrapping machine may comprise various cyclically moving components, such as actuators, pistons, bearings, belts, or motors, which are responsible for controlling the movement of the wrapping material and the packages. In some examples, the system 100 may be applied to a filling machine, which is responsible for filling food products into packages, i.e. containers for the food, such as food cartons, bottles, cans, or bags. The filling machine may comprise various cyclically moving components, such as actuators, pistons, bearings, belts, or motors, which are responsible for controlling the movement of the containers and the food products. In other examples, the system 100 may be applied to a conveyor machine, which is responsible for conveying the packages along the food packaging line. The conveyor machine may comprise various cyclically moving components, such as actuators, pistons, bearings, belts, or motors, which are responsible for controlling the movement of the conveyor belt and the packages.

Additionally, the system 100 may be applied to sealing machines, which are responsible for sealing containers filled with food products, and packaging machines, which are responsible for packing the sealed containers into boxes or other packaging materials. These machines may also comprise various cyclically moving components, such as actuators, pistons, bearings, belts, or motors, which are responsible for controlling the movement of the containers, the sealing material, and the packaging material. By monitoring the state variables of these components, the system 100 can determine the associated operational probability (P) as described above and rapidly detect any deviations from the normal operation of these machines and take appropriate action, such as stopping the machine 200 or generating an alarm signal.

The system 100 may be configured to determine the operational probability (P) based on estimations of a plurality of state variables, such as position error estimation and torque estimation, and respective generated models for how the state variables vary over their respective cycle, which can provide a more accurate and comprehensive assessment of the normal operation of the cyclically moving components. This is described on more detail in the following.

In some examples, the system 100 may be configured to determine the operational probability (P) based on estimations of a plurality of state variables, such as position error estimation and torque estimation, and respective generated models for how the state variables vary over their respective cycle. This multivariate method allows for a more comprehensive monitoring of the cyclically moving component by considering multiple aspects of its operation.

The combined probability of normal operation can be calculated based on the individual operational probabilities of each state variable, providing a more accurate and reliable indication of the overall operation of the cyclically moving component. This multivariate method offers the advantage of improved monitoring and early detection of deviations in the operation of the cyclically moving component, leading to enhanced efficiency and reliability of the food packaging line.

In some examples, the system 100 may be configured to monitor multiple state variables, such as position error estimation and torque estimation, for a cyclically moving component. The position error estimation may be related to the deviation of the component's actual position from its desired position during the cycle, while the torque estimation may be related to the force exerted by the component during its operation. By monitoring both position error and torque, the system 100 can provide a more accurate representation of the component's operation and detect deviations in its performance more effectively.

In some examples, the system 100 may calculate the combined probability of normal operation based on the estimations of multiple state variables and their respective generated models. For instance, the system 100 may determine the operational probability P1 for the position error estimation and the operational probability P2 for the torque estimation. These probabilities may be calculated separately using the methods described in the previous sections, such as generating a model curve for each state variable and determining the operational probability based on the model and an estimation of the state variable for each step in the cycle.

Once the operational probabilities P1 and P2 are determined, the system 100 may calculate the combined probability of normal operation by considering both probabilities. In one example, the combined probability may be calculated as the product of the individual probabilities, i.e., P = P1 * P2. Alternatively, other mathematical methods may be used to combine the probabilities, such as weighted averages or other statistical techniques.

The combined probability of normal operation provides a more comprehensive assessment of the component's performance, as it takes into account multiple aspects of the component's operation. This allows for a more accurate determination of whether the component is operating under normal conditions or if there is a deviation that requires attention.

By implementing the multivariate method for monitoring multiple state variables, the system 100 may provide several advantages. First, it allows for a more accurate representation of the component's operation, as it considers multiple aspects of the component's performance. This can lead to a more reliable determination of the operational probability and a more effective detection of deviations in the component's operation. Second, the multivariate method can enhance the system's ability to detect potential issues in the component's operation before they lead to more significant problems or failures, thus improving the overall efficiency and reliability of the machine 200 in the food packaging line. Finally, the multivariate method may be easily adapted to monitor different types of state variables and components, making the system 100 highly versatile and applicable to various machines and processes in the food packaging industry.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A system (100) for monitoring a cyclically moving component of a machine (200) in a food packaging line, the system comprising:

   a controller (101) configured to receive sensor data (d) from the machine;
   wherein the controller (101) is further configured to:

   detect a state variable (s) of the cyclically moving component from the sensor data, wherein the state variable is detected over a cycle of the component's movement;
   generate a model (M) of how the state variable varies over the cycle of the component's movement, the model comprises a model curve adapted to a plurality of measured values of the state variable in the sensor data, wherein the state variable is measured at defined steps of the cycle, such as at a defined time interval;
   determine an operational probability (P) of the component based on the model and an estimation of the state variable for each subsequent step in the cycle; wherein the operational probability (P) is in the range of 0 to 1, where 1 represents a likelihood of 100% of normal operation, and
   stop operation of the machine if the operational probability (P) drops below a defined threshold value (T).

2. The system (100) according to claim 1, further comprising a state estimator (102) in communication with the controller (101), the state estimator (102) is configured to determine the estimation the state variable for each step in the cycle based on the model, a measured value of the state variable at a current step in the cycle and on previous estimations of the state variable.

3. The system (100) according to claim 2, wherein the state estimator (102) comprises a Particle filter.

4. The system (100) according to any one of the preceding claims, wherein the operational probability (P) for a next step of the cycle is calculated according to;

$$p = e^{\left( \frac{-K_t \cdot |\hat{s} - \overline{\mu}|}{x \cdot \overline{\sigma}} \right)}$$

where $K_t$ and x are curve fitting parameters,
$\hat{s}$ is the estimation of the state variable for the next step of the cycle,
is the mean of the model curve, and
is the standard deviation of the model curve.

5. The system (100) according to any one of the preceding claims, wherein the model comprises a Gaussian model represented by a mixture of Guassian functions.

6. The system (100) according to any one of the preceding claims, wherein the state variable comprises a position error, a motor current, and/or a motor torque.

7. The system (100) according to any one of the preceding claims, wherein the controller is configured to perform a moving average calculation for calculating the operational probability (P) over a defined time interval.

8. The system (100) according to any one of the preceding claims, wherein the controller is configured to determine the operational probability (P) based on estimations of a plurality of state variables, such as position error estimation and torque estimation, and respective generated models for how the state variables vary over their respective cycle.

9. The system (100) according to any one of the preceding claims, wherein the sensor data is received from existing sensors in the machine.

10. The system (100) according to any one of the preceding claims, wherein the controller (101) is configured to send the operational probability (P) to a Programmable Logic Controller (PLC) (201) in communication with the controller (101), wherein the PLC (201) sends a control signal to stop operation of the machine if the operational probability (P) drops below a defined threshold value.

11. The system (100) according to any one of the preceding claims, wherein the controller (101) is further configured to generate an alarm signal when the operational probability (P) drops below a predefined alarm threshold value.

12. The system (100) according to any one of the preceding claims, wherein the cyclically moving component comprises an actuator, a piston, a bearing, a belt, and/or a motor.

13. A method (300) for monitoring a cyclically moving component of a machine (200) in a food packaging line, the method comprising:

receiving (301) sensor data (d) from the machine;
detecting (302) a state variable (s) of the cyclically moving component from the sensor data, wherein the state variable is detected over a cycle of the component's movement;
generating (303) a model (M) of how the state variable varies over the cycle of the component's movement, the model comprises a model curve adapted to a plurality of measured values of the state variable in the sensor data, wherein the state variable is measured at defined steps of the cycle, such as at a defined time interval;
determining (304) an operational probability (P) of the component based on the model and an estimation of the state variable for each subsequent step in the cycle, wherein the operational probability (P) is in the range of 0 to 1, where 1 represents a likelihood of 100% of normal operation; and
stop operation (305) of the machine if the operational probability (P) drops below a defined threshold value (T).

14. A machine (200) for a food packaging line comprising a cyclically moving component and a system (100) for monitoring the cyclically moving component according to any of the claims 1-12, wherein the system (100) is in communication with the machine.

15. A machine (200) according to claim 14, comprising a wrapping machine, a filling machine, a conveyor machine, a sealing machine, and/or a packaging machine.

**Patentansprüche**

1. System (100) zum Überwachen einer sich zyklisch bewegenden Komponente einer Maschine (200) in einer Lebensmittelverpackungslinie, wobei das System Folgendes umfasst:

eine Steuerung (101), die dazu ausgelegt ist, Sensordaten (d) von der Maschine zu empfangen;
wobei die Steuerung (101) ferner ausgelegt ist zum:

Detektieren einer Zustandsvariable (s) der sich zyklisch bewegenden Komponente aus den Sensordaten, wobei die Zustandsvariable über einen Zyklus der Bewegung der Komponente detektiert wird;
Erzeugen eines Modells (M), wie die Zustandsvariable über den Zyklus der Bewegung der Komponente variiert, wobei das Modell eine Modellkurve umfasst, die an mehrere Messwerte der Zustandsvariable in den Sensordaten angepasst ist, wobei die Zustandsvariable an definierten Schritten des Zyklus, wie etwa in einem definierten Zeitintervall, gemessen wird;
Bestimmen einer Betriebswahrscheinlichkeit (P) der Komponente basierend auf dem Modell und einer Schätzung der Zustandsvariable für jeden nachfolgenden Schritt in dem Zyklus; wobei die Betriebswahrscheinlichkeit (P) im Bereich von 0 bis 1 liegt, wobei 1 eine Wahrscheinlichkeit von 100 % des normalen Betriebs repräsentiert, und
Stoppen des Betriebs der Maschine, wenn die Betriebswahrscheinlichkeit (P) einen definierten Schwellenwert (T) unterschreitet.

2. System (100) nach Anspruch 1, ferner umfassend einen Zustandsschätzer (102) in Kommunikation mit der Steuerung (101), wobei der Zustandsschätzer (102) dazu ausgelegt ist, die Schätzung der Zustandsvariable für jeden Schritt in dem Zyklus basierend auf dem Modell, einem gemessenen Wert der Zustandsvariable an einem aktuellen Schritt in dem Zyklus und auf vorherigen Schätzungen der Zustandsvariable zu bestimmen.

3. System (100) nach Anspruch 2, wobei der Zustandsschätzer (102) einen Partikelfilter umfasst.

4. System (100) nach einem der vorhergehenden Ansprüche, wobei die Betriebswahrscheinlichkeit (P) für einen nächsten Schritt des Zyklus berechnet wird gemäß:

$$p = e^{\left(\frac{-K_t \cdot |\hat{s} - \overline{\mu}|}{x \cdot \overline{\sigma}}\right)}$$

wobei $K_t$ und x Kurvenanpassungsparameter sind,
ŝ die Schätzung der Zustandsvariable für den nächsten Schritt des Zyklus ist,
der Mittelwert der Modellkurve ist, und
die Standardabweichung der Modellkurve ist.

5. System (100) nach einem der vorhergehenden Ansprüche, wobei das Modell ein Gauß-Modell umfasst, das durch eine Mischung von Gaußschen Funktionen repräsentiert wird.

6. System (100) nach einem der vorhergehenden Ansprüche, wobei die Zustandsvariable einen Positionsfehler, einen Motorstrom und/oder ein Motormoment umfasst.

7. System (100) nach einem der vorhergehenden Ansprüche, wobei die Steuerung dazu ausgelegt ist, eine gleitende Durchschnittsberechnung zum Berechnen der Betriebswahrscheinlichkeit (P) über ein definiertes Zeitintervall durchzuführen.

8. System (100) nach einem der vorhergehenden Ansprüche, wobei die Steuerung dazu ausgelegt ist, die Betriebswahrscheinlichkeit (P) basierend auf Schätzungen mehrerer Zustandsvariablen, wie etwa Positionsfehlerschätzung und Drehmomentschätzung, und jeweiligen erzeugten Modellen dafür zu bestimmen, wie die Zustandsvariablen über ihren jeweiligen Zyklus variieren.

9. System (100) nach einem der vorhergehenden Ansprüche, wobei die Sensordaten von bestehenden Sensoren in der Maschine empfangen werden.

10. System (100) nach einem der vorhergehenden Ansprüche, wobei die Steuerung (101) dazu ausgelegt ist, die Betriebswahrscheinlichkeit (P) an eine speicherprogrammierbare Steuerung (SPS) (201) in Kommunikation mit der Steuerung (101) zu senden, wobei die SPS (201) ein Steuersignal sendet, um den Betrieb der Maschine zu stoppen, wenn die Betriebswahrscheinlichkeit (P) unter einen definierten Schwellenwert fällt.

11. System (100) nach einem der vorhergehenden Ansprüche, wobei die Steuerung (101) ferner dazu ausgelegt ist, ein Alarmsignal zu erzeugen, wenn die Betriebswahrscheinlichkeit (P) unter einen vordefinierten Alarmschwellenwert fällt.

12. System (100) nach einem der vorhergehenden Ansprüche, wobei die sich zyklisch bewegende Komponente einen Aktuator, einen Kolben, ein Lager, einen Riemen und/oder einen Motor umfasst.

13. Verfahren (300) zum Überwachen einer sich zyklisch bewegenden Komponente einer Maschine (200) in einer Lebensmittelverpackungslinie, wobei das Verfahren Folgendes umfasst:

Empfangen (301) von Sensordaten (d) von der Maschine;
Detektieren (302) einer Zustandsvariable (s) der sich zyklisch bewegenden Komponente aus den Sensordaten, wobei die Zustandsvariable über einen Zyklus der Bewegung der Komponente detektiert wird;
Erzeugen (303) eines Modells (M), wie die Zustandsvariable über den Zyklus der Bewegung der Komponente variiert, wobei das Modell eine Modellkurve umfasst, die an mehrere Messwerte der Zustandsvariable in den Sensordaten angepasst ist, wobei die Zustandsvariable an definierten Schritten des Zyklus, wie etwa in einem definierten Zeitintervall, gemessen wird;
Bestimmen (304) einer Betriebswahrscheinlichkeit (P) der Komponente basierend auf dem Modell und einer Schätzung der Zustandsvariable für jeden nachfolgenden Schritt in dem Zyklus, wobei die Betriebswahrscheinlichkeit (P) im Bereich von 0 bis 1 liegt, wobei 1 eine Wahrscheinlichkeit von 100 % des normalen Betriebs repräsentiert; und
Stoppen des Betriebs (305) der Maschine, wenn die Betriebswahrscheinlichkeit (P) einen definierten Schwellenwert (T) unterschreitet.

14. Maschine (200) für eine Lebensmittelverpackungslinie, die eine sich zyklisch bewegende Komponente und ein System (100) zum Überwachen der sich zyklisch bewegenden Komponente nach einem der Ansprüche 1-12 umfasst, wobei das System (100) in Kommunikation mit der Maschine steht.

15. Maschine (200) nach Anspruch 14, umfassend eine Einschlagmaschine, eine Füllmaschine, eine Fördermaschine, eine Versiegelungsmaschine und/oder eine Verpackungsmaschine.

**Revendications**

1. Système (100) de surveillance d'un composant à déplacement cyclique d'une machine (200) dans une chaîne d'emballage d'aliments, le système comprenant :

un contrôleur (101) configuré pour recevoir des données de capteur (d) provenant de la machine ;
dans lequel le contrôleur (101) est en outre configuré pour :

détecter une variable d'état (s) du composant à déplacement cyclique à partir des données de capteur, la variable d'état étant détectée sur un cycle de déplacement du composant ;
générer un modèle (M) de variation de la variable d'état sur le cycle du déplacement du composant, le modèle comprenant une courbe de modèle adaptée à une pluralité de valeurs mesurées de la variable d'état dans les données de capteur, dans lequel la variable d'état est mesurée à des étapes définies du cycle, par exemple à un intervalle de temps défini ;

déterminer une probabilité opérationnelle (P) du composant sur la base du modèle et d'une estimation de la variable d'état pour chaque étape suivante du cycle ; la probabilité opérationnelle (P) étant comprise entre 0 et 1, où 1 représente une probabilité de 100 % de fonctionnement normal, et arrêter le fonctionnement de la machine si la probabilité opérationnelle (P) descend en dessous d'une valeur seuil définie (T).

**2.** Système (100) selon la revendication 1, comprenant en outre un estimateur d'état (102) en communication avec le contrôleur (101), l'estimateur d'état (102) étant configuré pour déterminer l'estimation de la variable d'état pour chaque étape du cycle sur la base du modèle, d'une valeur mesurée de la variable d'état à une étape courante du cycle et d'estimations précédentes de la variable d'état.

**3.** Système (100) selon la revendication 2, dans lequel l'estimateur d'état (102) comprend un filtre à particules.

**4.** Système (100) selon l'une quelconque des revendications précédentes, dans lequel la probabilité opérationnelle (P) pour une étape suivante du cycle est calculée selon :

$$ p = e^{\left( \frac{-K_t \cdot |\hat{s} - \overline{\mu}|}{x \cdot \overline{\sigma}} \right)} $$

où $K_t$ et x sont des paramètres d'ajustement de courbe,

$\hat{s}$ est l'estimation de la variable d'état pour l'étape suivante du cycle,

est la moyenne de la courbe du modèle, et

est l'écart type de la courbe du modèle.

**5.** Système (100) selon l'une quelconque des revendications précédentes, dans lequel le modèle comprend un modèle gaussien représenté par un mélange de fonctions gaussiennes.

**6.** Système (100) selon l'une quelconque des revendications précédentes, dans lequel la variable d'état comprend une erreur de position, un courant de moteur et/ou un couple de moteur.

**7.** Système (100) selon l'une quelconque des revendications précédentes, dans lequel le contrôleur est configuré pour effectuer un calcul de moyenne mobile pour calculer la probabilité opérationnelle (P) sur un intervalle de temps défini.

**8.** Système (100) selon l'une quelconque des revendications précédentes, dans lequel le contrôleur est configuré pour déterminer la probabilité opérationnelle (P) sur la base d'estimations d'une pluralité de variables d'état, telles que l'estimation d'erreur de position et l'estimation de couple, et de modèles générés respectifs pour la façon dont les variables d'état varient sur leur cycle respectif.

**9.** Système (100) selon l'une quelconque des revendications précédentes, dans lequel les données de capteur sont reçues depuis des capteurs existants dans la machine.

**10.** Système (100) selon l'une quelconque des revendications précédentes, dans lequel le contrôleur (101) est configuré pour envoyer la probabilité opérationnelle (P) à un automate programmable (PLC) (201) en communication avec le contrôleur (101), dans lequel le PLC (201) envoie un signal de commande pour arrêter le fonctionnement de la machine si la probabilité opérationnelle (P) descend en dessous d'une valeur seuil définie.

**11.** Système (100) selon l'une quelconque des revendications précédentes, dans lequel le contrôleur (101) est en outre configuré pour générer un signal d'alarme lorsque la probabilité de fonctionnement (P) descend en dessous d'une valeur seuil d'alarme prédéfinie.

**12.** Système (100) selon l'une quelconque des revendications précédentes, dans lequel le composant à déplacement cyclique comprend un actionneur, un piston, un palier, une courroie et/ou un moteur.

**13.** Procédé (300) de surveillance d'un composant à déplacement cyclique d'une machine (200) dans une chaîne d'emballage d'aliments, le procédé comprenant :

la réception (301) de données de capteur (d) en provenance de la machine ;

la détection (302) d'une variable d'état (s) du composant à déplacement cyclique à partir des données de capteur,

la variable d'état étant détectée sur un cycle de déplacement du composant ;

la génération (303) d'un modèle (M) de variation de la variable d'état sur le cycle du déplacement du composant,

le modèle comprenant une courbe de modèle adaptée à une pluralité de valeurs mesurées de la variable d'état dans les données de capteur, dans lequel la variable d'état est mesurée à des étapes définies du cycle, par exemple à un intervalle de temps défini ;

la détermination (304) d'une probabilité opérationnelle (P) du composant sur la base du modèle et d'une estimation de la variable d'état pour chaque étape suivante du cycle, la probabilité opérationnelle (P) étant comprise entre 0 et 1, où 1 représente une probabilité de 100 % de fonctionnement normal ; et
l'arrêt (305) du fonctionnement de la machine si la probabilité opérationnelle (P) descend en dessous d'une valeur seuil définie (T).

14. Machine (200) pour une chaîne d'emballage d'aliments comprenant un composant à déplacement cyclique et un système (100) pour surveiller le composant à déplacement cyclique selon l'une quelconque des revendications 1 à 12, dans laquelle le système (100) est en communication avec la machine.

15. Machine (200) selon la revendication 14, comprenant une machine d'emballage, une machine de remplissage, une machine de transport, une machine à sceller et/ou une machine d'emballage.

**Fig. 1**

Fig. 2a

Fig. 2b

EP 4 575 689 B1

**Fig. 3a**

**Fig. 3b**

EP 4 575 689 B1

Fig. 4

**Fig. 5**

Fig. 6

**Fig. 7**

300

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021403246 A1
- CN 112906157 A
- CN 109726524 B
- CN 115034137 A